(19) Europäisches Patentamt
European Patent Office
Office européen des brevets

(11) Veröffentlichungsnummer: **0 170 838**
**B1**

# (12) EUROPÄISCHE PATENTSCHRIFT

(45) Veröffentlichungstag der Patentschrift: **12.07.89**

(51) Int. Cl.⁴: **C 09 B 62/04,** D 06 P 1/382

(21) Anmeldenummer: **85107542.4**

(22) Anmeldetag: **19.06.85**

(54) **Reaktivfarbstoffe der Dioxazinreihe, deren Herstellung und Verwendung.**

(30) Priorität: **27.06.84 DE 3423581**

(43) Veröffentlichungstag der Anmeldung: **12.02.86 Patentblatt 86/7**

(45) Bekanntmachung des Hinweises auf die Patenterteilung: **12.07.89 Patentblatt 89/28**

(84) Benannte Vertragsstaaten: **CH DE FR GB IT LI**

(56) Entgegenhaltungen:
**EP-A-0 141 359**
**DE-A-2 600 490**
**DE-C-725 288**
**FR-A-2 095 580**
**FR-A-2 397 443**
**GB-A-1 450 214**
**GB-A-1 589 915**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Jäger, Horst, Dr., Carl- Rumpff- Strasse 37, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 170 838 B1

LIBER, STOCKHOLM 1989

**Beschreibung**

Gegenstand der vorliegenden Erfindung sind Reaktivfarbstoffe der Formel

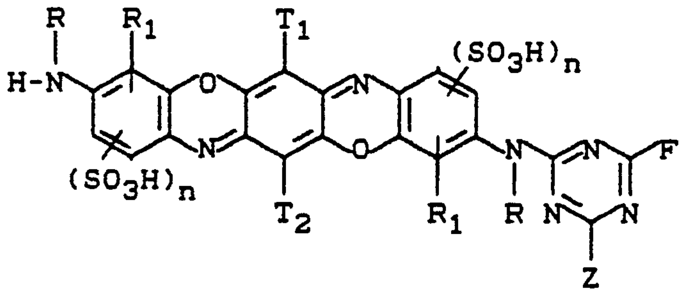

(1)

worin
$R = H$,
$R_1 = H$,
$T_1, T_2 = H$, Cl, Br, gegebenenfalls substituiertes $C_1$-$C_4$-Alkyl, $C_1$-$C_4$-Alkoxy, Phenyl oder Phenoxy,
$Z = Z_1$, wobei $Z_1$ = durch eine anionische, wasserlöslichmachende Gruppe substituierte $C_1$-$C_4$-aliphatische Aminogruppe, insbesondere

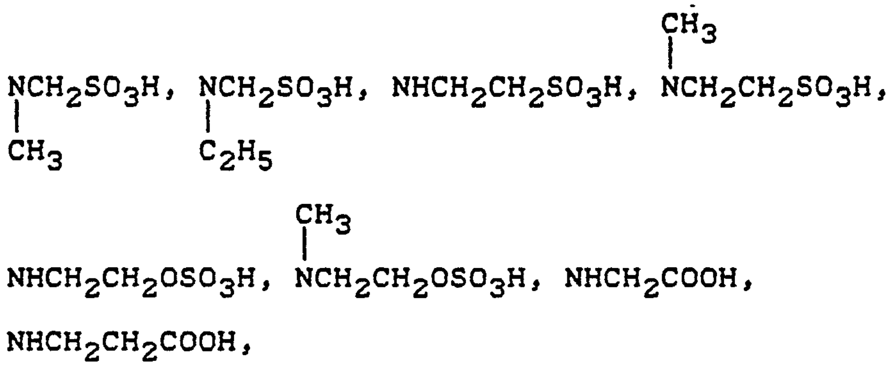

$Z = Z_6$, wobei $Z_6$ = 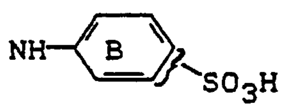 ,

worin der Benzolring B durch eine Gruppe $CH_3$, $C_2H_5$, $OCH_3$, $OC_2H_5$, Cl substituiert sein kann,

$Z = Z_7$, wobei $Z_7$ = 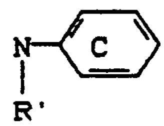 ,

worin der Benzolring C gegebenenfalls durch Cl, $CH_3$, $C_2H_5$, $OCH_3$, $OC_2H_5$, $SO_3H$ oder COOH substituiert sein kann, R' = gegebenenfalls substituiertes $C_1$-$C_4$-Alkyl, wobei der Rest $Z_7$ vorzugsweise eine $SO_3H$- oder $OSO_3H$-Gruppe enthält,
$n = 1$,
mit Ausnahme von Farbstoffen mit $T_1 = T_2 = Cl$ und Z = Rest des 3,5-Disulfoanilins, 2,5-Disulfoanilins, 2-Sulfoanilins, 2-Carboxy-4-sulfoanilins oder 2,3-Dicarboxyanilins,

sowie deren Verwendung zum Färben und Bedrucken von hydroxyl- und amidgruppenhaltigen Materialien und die so gefärbten oder bedruckten Materialien.

Substituenten der gegebenenfalls substituierten $C_1$-$C_4$-Alkyl- und $C_1$-$C_4$-Alkoxyreste $T_1$ bzw. $T_2$ sind z. B. $OCH_3$, $OC_2H_5$, $OSO_3H$.

Substituenten der gegebenenfalls substituierten Phenylund Phenoxyreste $T_1$ bzw. $T_2$ sind beispielsweise Cl, Br, $CH_3$, $C_2H_5$, $OCH_3$ und $OC_2H_5$.

Als Beispiele für Z seien folgende genannt: $NHCH_2CH_2SO_3H$, $NHCH_2CH_2OSO_3H$, $NHCH_2COOH$, $NHCH_2CH_2COOH$, $NH(CH_2)_4SO_3H$,

$N(CH_2CH_2OSO_3H)_2$, 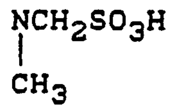, 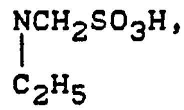,

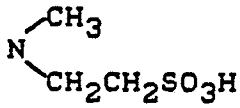, 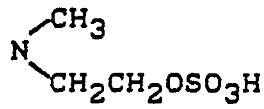, $NHCH_2CH_2SO_2CH_2CH_2OSO_3H$,

$N(CH_2CH_2SO_2CH_2CH_2OSO_3H)_2$, $NHCH_2CH_2SO_2CH_2CH_2S_2O_3H$,

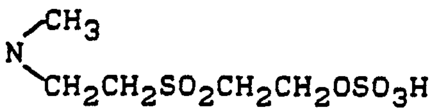,

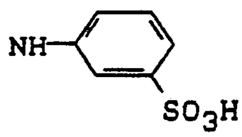, 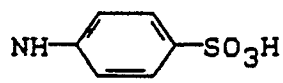, 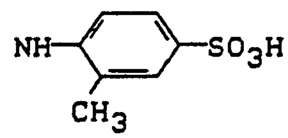,

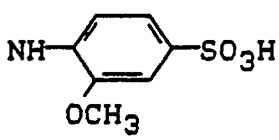, 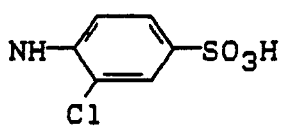, 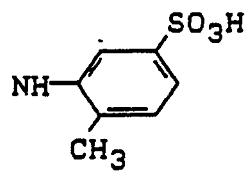,

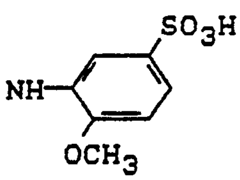, 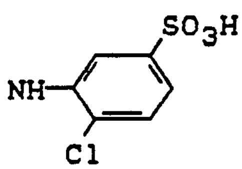, 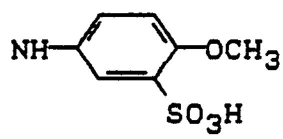,

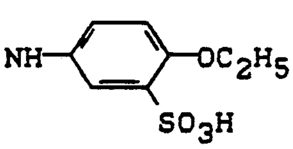, 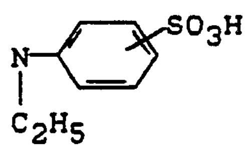, 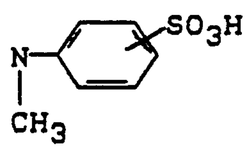

Im Rahmen der Formel (1) bevorzugte Farbstoffe entsprechen folgender Formel:

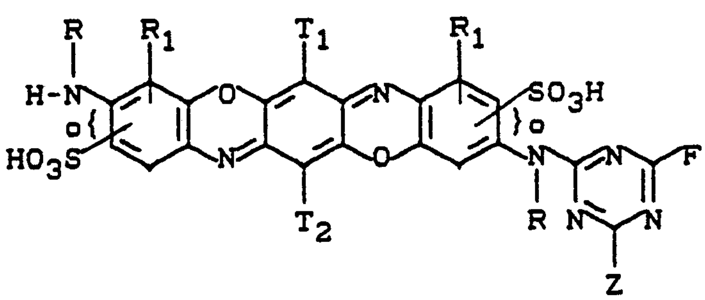

(2)

worin

$T_1$, $T_2$, R, $R_1$ und Z die oben angegebene Bedeutung haben.

Besonders bevorzugt sind Farbstoffe der Formel (1) bzw. (2), in denen $T_1$, $T_2$ = Cl.

Besonders bevorzugte Reste R' sind beispielsweise

$-CH_2CH_2OSO_3H$, 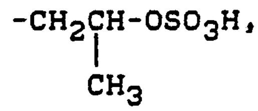

bevorzugte Reste 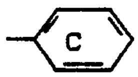 sind 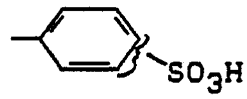 .

Gegenstand der Erfindung ist weiterhin ein Verfahren zur Herstellung der Farbstoffe der Formel (1). Es ist dadurch gekennzeichnet, daß man 1 Mol eines Triphendioxazinfarbstoffs der Formel

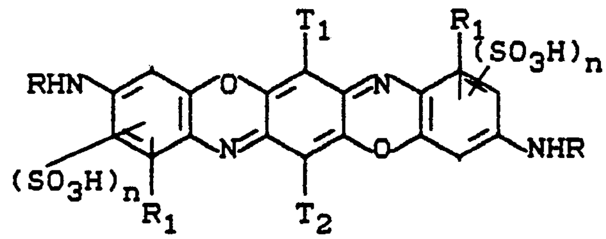

(3)

vorzugsweise in Form der entsprechenden Lithiumsalze mit

1 Mol 2,4,6-Trifluortriazin (4) unter Abspaltung von 1 Mol Flußsäure, vorzugsweise unter Verwendung von basischen Lithiumverbindungen wie LiOH oder $Li_2CO_3$ als Säurefänger zu einer Difluortriazinverbindung kondensiert und dann mit 1 Mol eines Amins der Formel (5)

H-Z (5)

unter Abspaltung von 1 Mol Flußsäure umsetzt, vorzugsweise unter Neutralisierung der Flußsäure mit basischen Lithiumverbindungen von LiOH oder $Li_2CO_3$.

Die Herstellung von Verbindungen der Formel (3) erfolgt nach an sich bekannten Methoden durch Kondensation von 1,4-Benzochinonen der Formel

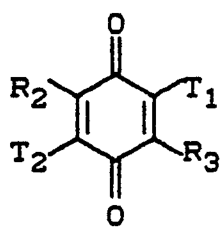

(6)

worin $T_1$ und $T_2$ die oben angegebene Bedeutung haben und $R_2$ und $R_3$ H, Cl, Br, O-Alkyl oder O-Aryl bedeuten mit Diaminobenzolen der Formel

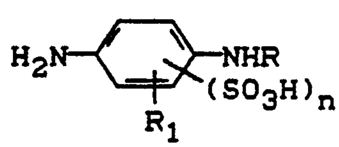

(7)

worin R, $R_1$ und n die oben angegebene Bedeutung haben, zu Verbindungen der Formel

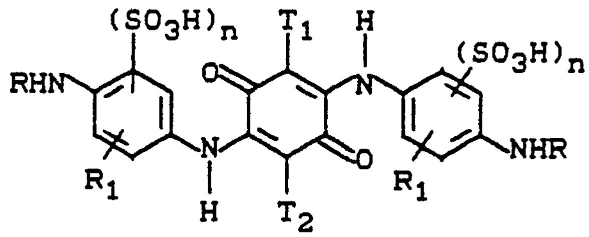

(8)

und nachfolgenden Ringschluß der Dianilverbindung (8) zu der Dioxazinfarbbase (3).

Die Kondensation der Benzochinone der Formel (6) mit den Diaminobenzolen der Formel (7) erfolgt am besten in wäßrigem oder wäßrig-organischem Medium unter Zugabe alkalischer Kondensationsmittel bei pH-Werten von 2 - 10, vorzugsweise 5 - 7, und Temperaturen von 0 - 70°C, vorzugsweise 20 - 50°C. Man kann auch in rein organischem Milieu unter Zusatz säurebindender Mittel arbeiten.

Alkalische Kondensationsmittel sind beispielsweise Natriumhydrogencarbonat, Natriumcarbonat, Natrium- oder Kaliumacetat, Natron- oder Kalilauge, Natriumphosphate, Natriumborat.

Die Kondensationsprodukte der Formel (8) können durch Aussalzen oder Ansäuern abgeschieden werden.

Eine Variante zur Herstellung von Verbindungen der Formel (8) besteht in der Addition von Diaminobenzolen der Formel (7) an 1,4-Benzochinone der Formel

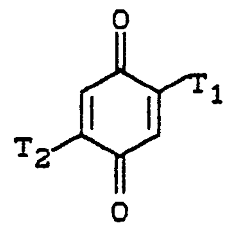

(9)

worin $T_1$ und $T_2$ die angegebene Bedeutung haben, und der Oxidation der primär entstehenden Addukte.

Beispiele für Chinone der Formel (6) und (9) sind in der Deutschen Offenlegungsschrift 2 823 828 auf Seiten 27 bis 31 genannt.

Geeignete Diaminobenzole der Formel (7) sind beispielsweise folgende:
1,4-Diaminobenzol-2-sulfonsäure.

Der Ringschluß der Dianilverbindungen der Formel (8) kann nach an sich bekannten Methoden, wie sie in den Deutschen Offenlegungsschriften 2 122 262, 2 124 080, 2 302 382, 2 344 781, 2 503 611, 2 823 828 und in der Britischen Patentschrift 1 589 915 erwähnt sind, insbesondere in Oleum mit $SO_3$-Gehalten von 1 - 50 % bei Temperaturen von 10 - 80°C, gegebenenfalls mit Zusatz von Oxidationsmittel wie Kalium- oder Ammoniumperoxidisulfat oder organischen Peroxiden vorgenommen werden.

Eine besonders vorteilhafte Variante für die Herstellung von Verbindungen (3) mit n = 1 besteht darin, daß man den Ringschluß in Oleum vorzugsweise in Gegenwart von Persulfaten oder katalytischen Mengen Iod oder einer anorganischen Iodverbindung mit den entsprechenden inneren Salzen (Betainen) der Verbindungen (8) mit n = 1, die man durch Ansäuern erhält, durchführt.

Geeignete Iodverbindungen sind beispielsweise Alkaliiodide wie NaJ oder KJ.

Der Ringschluß wird vorzugsweise bei Temperaturen von 10 - 40°C durchgeführt.

Im allgemeinen verwendet man Oleum mit einem $SO_3$-Gehalt von 20 - 50 % in Mengen von etwa 3 - 10 Gewichtsteilen pro Gewichtsteil (8).

Unter den Bedingungen des Ringschlusses in Oleum können in den Dianilverbindungen der Formel (8) vorhandene aliphatische OH-Gruppen sulfatiert und aromatische Ringe sulfiert werden.

Die neuen Farbstoffe geben auf Cellulose- sowie natürlichen oder synthetischen Polyamidmaterialien klare, rotstichig-blaue Färbungen. Sie zeichnen sich durch hohe Farbstärke aus.

Als wasserlösliche Reaktivfarbstoffe finden die neuen Farbstoffe bevorzugtes Interesse für das Färben von hydroxyl- und amidgruppenhaltigen Textilmaterialien, insbesondere von Materialien aus nativer und regenerierter Cellulose sowie synthetischen Polyamid- und Polyurethanfasern, Wolle und Seide.

Die genannten Materialien werden nach den für wasserlösliche Reaktivfarbstoffe allgemein bekannten und in der Technik üblichen Verfahren gefärbt oder bedruckt Man erhält dann licht- und naßechte blaue Färbungen und Drucke.

Bei den Temperaturangaben in den Beispielen handelt es sich um °C. Die Formeln der wasserlöslichen Reaktivfarbstoffe in der Beschreibung und in den Beispielen sind die der freien Säuren. Isoliert und angewandt werden die Farbstoffe im allgemeinen in Form ihrer Alkalisalze, insbesondere der Lithium-, Natrium- oder Kaliumsalze.

Die in den Beispielen angegebenen Farbkennzahlen beziehen sich auf "Colour Index Hue Indication Chart" (Indicator Numbers, Farbkennzahl).

In der FR-A-2 397 443 werden Triphendioxazin-Reaktivfarbstoffe beschrieben, die über ein aliphatisches

Brückenglied gebunden zwei Chlortriazinylreste enthalten.

In der DE-A-2 600 490 wird die Umsetzung von 9,13-Dichlor-triphendioxazin mit zwei kernständigen Aminogruppen mit den Reaktionsprodukten von 3,5-Disulfoanilin, 2,5-Disulfoanilin, 2-Sulfoanilin, 2-Carboxy-4-sulfoanilin oder 2,3-Dicarboxyanilin mit Trifluortriazin im Molverhältnis 1 : 2 beschrieben.

**Beispiel 1**

Dianilkondensation

188 g 1,4-Diaminobenzol-2-sulfonsäure werden in 3 l Wasser bei pH 6,5 gelöst. Dazu gibt man eine Anschlämmung von 123 g Tetrachlor-p-benzochinon (Chloranil) in 500 ml Wasser und 2 g Monopolbrillantöl und erwärmt dann auf 30°C. Durch Zutropfen von Natronlauge wird ein pH zwischen 6 und 7 gehalten. Man rührt so lange bei 30°C, bis keine Natronlauge mehr verbraucht wird. Die Verbindung wird durch Ansäuern mit Salzsäure abgeschieden, wobei das entsprechende Betain ausfällt. Man kühlt auf 10 bis 15°C ab und saugt die Dianilverbindung ab. Nach dem Trocknen bei 100°C im Vakuumtrockenschrank erhält man ein braunes Pulver. Die Verbindung folgender Formel:

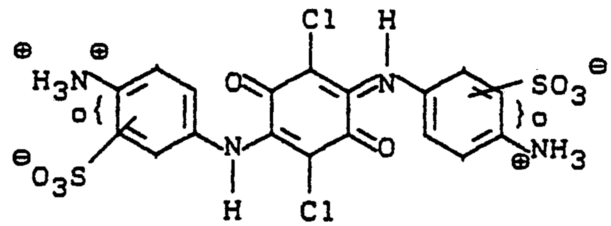

Rinschluß zum Triphendioxazin

a) im Oleum mit Kaliumpersulfat

54,9 g (berechnet auf die freie Säure) des Dianilkondensationsproduktes werden bei 15 - 20°C in 200 ml 20 %-iges Oleum eingetragen. In 2 Stunden trägt man dann 60 g Kaliumpersulfat ein, wobei man von außen kühlen muß um die Temperatur zwischen 15 und 20°C zu halten. Man rührt 2 Stunden und trägt die dunkelblaue Schmelze auf Eis/Wasser aus. Nach dem Absaugen wird die schwefelsaure Paste in 500 ml Wasser angeschlämmt und mit Natronlauge neutralisiert. Die Fällung wird durch Einstreuen von 10 Vol.-% Natriumchlorid vervollständigt. Man saugt ab, trägt die Paste in 500 ml Wasser ein und stellt mit Salzsäure auf pH 1. Der ausgefallene Farbstoff wird isoliert und auf der Nutsche mit Wasser ausgewaschen. Der Farbstoff entspricht der Formel

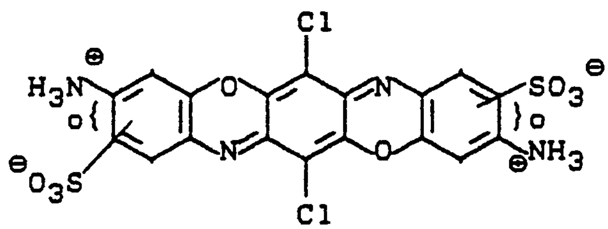

b) in Oleum mit Kaliumiodid

54,9 g (berechnet auf die freie Säure) des Dianilkondensationsproduktes werden bei 15 - 18°C in 1 Stunde in ein Gemisch aus 130 ml 20 %-igem, 70 ml 65 %-igem Oleum und 1 g Kaliumiodid eingetragen. Man rührt 4 Stunden bei 15 - 18°C nach und trägt dann die dunkelblaue Schmelze auf Eis/Wasser aus. Der Ansatz wird wie bei a) angegeben aufgearbeitet. Der Farbstoff entspricht der bei a) angegebenen Formel.

Eine Versuchsbeschreibung für den Ringschluß in Oleum ohne weitere Zusätze findet sich in Beispiel 1 der Deutschen Offenlegungsschrift 2 124 080.

**Herstellung des Reaktivfarbstoffs**

Die nach a) oder b) erhaltene wasserhaltige Paste der 2,9-Diamino-6,13-dichlor-triphendioxazindisulfosäure wird in 1,5 l Wasser angerührt und mit LiOH-Lösung neutralisiert. Die Lösung wird geklärt und mit 500 g Eis versetzt. Man tropft dann 13,5 g 2,4,6-Trifluortriazin ein, wobei man durch gleichzeitige Zugabe von LiOH-Lösung den pH zwischen 6 und 7 hält. Durch ein Dünnschichtchromatogramm kann man sich vom Ende der Kondensation überzeugen. Gegebenenfalls muß noch Trifluortriazin nachgesetzt werden. Das primäre Kondensationsprodukt wird mit einer neutralen Lösung von 17,3 g m-Sulfanilsäure versetzt. Man läßt dann die

Temperatur in 1 Stunde auf 15 bis 20°C ansteigen, wobei der pH mit LiOH-Lösung zwischen 6 und 7 gehalten wird. Nach beendeter Kondensation wird der Farbstoff bei pH 7 - 7,5 mit 15 Vol.-% NaCl ausgesalzen. Nach dem Absaugen, Trocknen bei 70°C im Vakuumtrockenschrank und Mahlen erhält man ein blaues Farbstoffpulver, das Baumwolle nach einem der für Reaktivfarbstoffe üblichen Verfahren in brillanten, stark rotstichigen Blautönen färbt (Farbkennzahl 13). Der Farbstoff entspricht der Formel

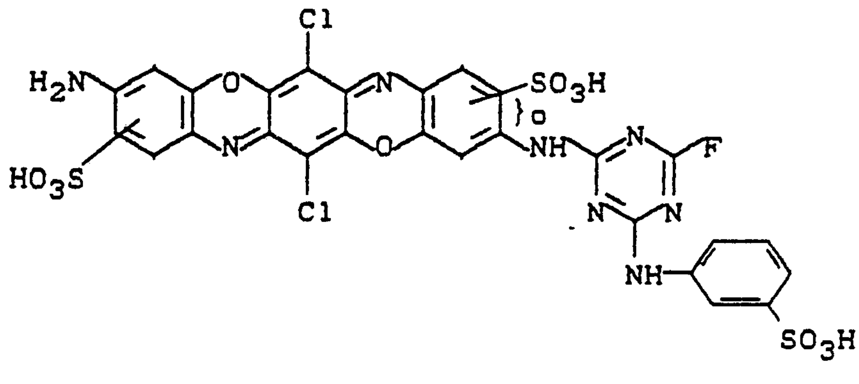

Die Elementaranalyse ergibt, daß auf 27 C-Atomen, 8 N-Atome kommen, wodurch die Monoacylierung des Diaminotriphen-dioxazins durch das Trifluortriazin bewiesen ist. Auch das Fehlen roter Anteile im Dünnschichtchromatogramm zeigt, daß eine Diacylierung nicht stattfindet.

Weitere Farbstoffe, die Baumwolle in klaren, stark rotstichig blauen Farbtönen mit der Farbkennzahl 13 färben, erhält man nach der Arbeitsweise dieses Beispiels, wenn man die dort verwendete m-Sulfanilsäure durch eine äquivalente Menge folgender Amine ersetzt:

**Tabelle 1**

p-Sulfanilsäure
1-Amino-4-methoxy-benzol-3-sulfonsäure
1-Amino-4-ethoxy-benzol-3-sulfonsäure
1-Amino-4-methyl-benzol-3-sulfonsäure
1-Amino-4-chlor-benzol-3-sulfonsäure
1-Amino-2-methoxy-benzol-4-sulfonsäure
1-Amino-2-methoxy-benzol-5-sulfonsäure
1-Amino-2-methoxy-5-methyl-benzol-4-sulfonsäure
1-Amino-2-methyl-benzol-4-sulfonsäure
1-Amino-2-methyl-benzol-5-sulfonsäure
1-Amino-2-chlor-benzol-5-sulfonsäure
1-Amino-2-chlor-benzol-4-sulfonsäure

**Beispiel 2**

Das nach Beispiel 1 erhaltene primäre Kondensationsprodukt aus 2,9-Diamino-6,13-triphendioxazin-disulfonsäure und Trifluortriazin wird bei 0 bis 3°C mit 12,5 g Taurin versetzt, wobei man einen pH von 8,8 - 9 durch Zugabe von verdünnter Natronlauge einhält. Man kondensiert 3 Stunden bei 0 bis 5°C und pH 8,8 - 9. Durch Einstreuen von Natriumdihydrogenphosphat stellt man den pH auf 7,2 - 7,5 und salzt den Farbstoff mit 15 Vol.-% Natriumchlorid aus. Nach dem Absaugen, Trocknen bei 70°C im Vakuumtrockenschrank und Mahlen erhält man ein blaues Farbstoffpulver, das Baumwolle nach einem der für Reaktivfarbstoffe üblichen Färbeverfahren in klaren, stark rotstichig blauen Farbtönen mit der Farbkennzahl 13 färbt. Der Farbstoff entspricht der Formel

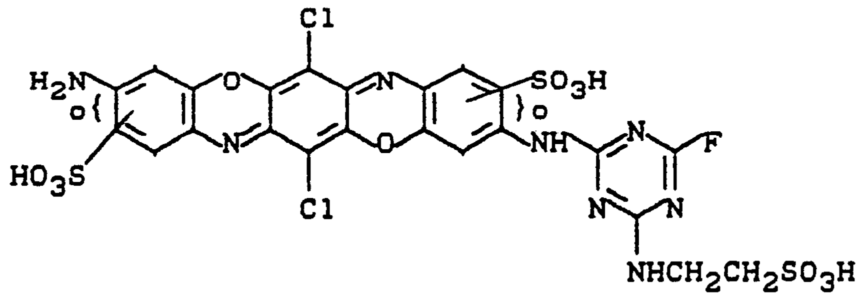

Weitere wertvolle Farbstoffe, die Baumwolle in klaren, stark rotstichig blauen Farbtönen mit der Farbkennzahl 13 färben, erhält man nach der Arbeitsweise des Beispiels 2 durch Ersatz des Taurin durch eine äquivalente Menge folgender Amine:

**Tabelle 2**

N-Methyltaurin
β-Sulfatoethylamin
4-Amino-n-butan-1-sulfonsäure
β-Aminoethyl-β′-sulfatoethyl-sulfon
Bis-(2-(β-Sulfatoethylsulfonyl)-ethyl)-amin
N-Methylaminomethansulfonsäure
N-Ethylaminomethansulfonsäure

**Beispiel 3**

Weitere ähnlich stark rotstichig blaue Farbstoffe mit der Farbkennzahl 13 erhält man, wenn man die in nachfolgender Tabelle aufgeführten 1,4-Diaminobenzole (7) mit den angegebenen 1,4-Benzochinonen (6) bzw. (9) kondensiert, die Kondensationsprodukte in der beschriebenen Weise cyclisiert und die Diaminotriphendioxazine mit Trifluortriazin acyliert und den Austausch des 2. Fluoratoms mit den in Beispiel 1, Tabelle 1 und Beispiel 2, Tabelle 2 aufgeführten Aminen nach der dort angegebenen Arbeitsweise vornimmt.

**Tabelle 3**

| 1,4-Diaminobenzol (7) | 1,4-Benzochinon (6) bzw. (9) |
|---|---|
| 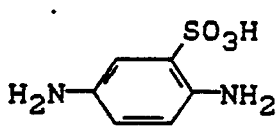 | 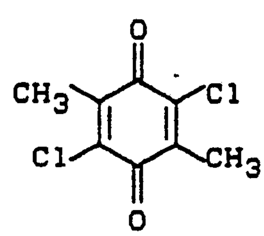 |

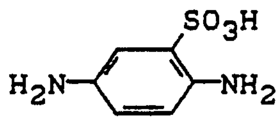

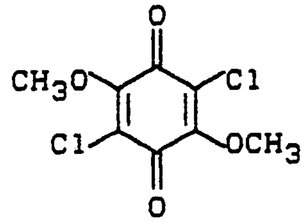

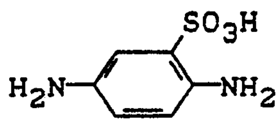

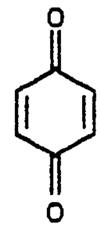

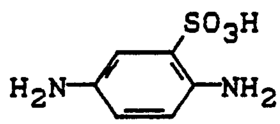

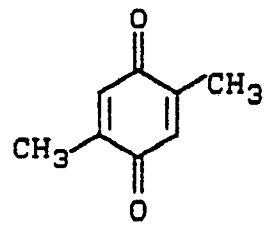

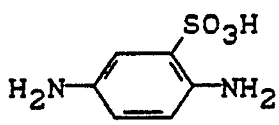

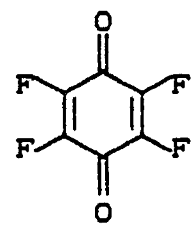

**Patentansprüche**

1. Reaktivfarbstoffe der Formel

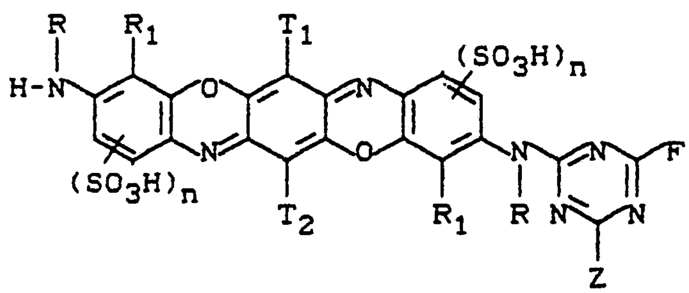

worin
R = H,
$R_1$ = H,
$T_1$, $T_2$ = H, Cl, Br, gegebenenfalls substituiertes $C_1$-$C_4$-Alkyl, $C_1$-$C_4$-Alkoxy, Phenyl oder Phenoxy,
Z = $Z_1$, wobei $Z_1$ = durch eine anionische, wasserlöslichmachende Gruppe substitueirte $C_1$-$C_4$-aliphatische Aminogruppe, insbesondere

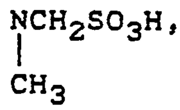 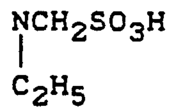 $NHCH_2CH_2SO_3H$, 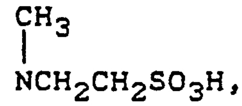

$NHCH_2CH_2OSO_3H$, 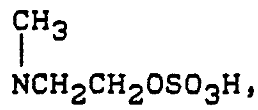 $NHCH_2COOH$,

$NHCH_2CH_2COOH$,

Z = $Z_6$, wobei $Z_6$ = 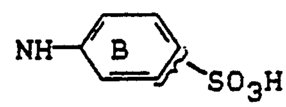 ,

worin der Benzolring B durch eine Gruppe $CH_3$, $C_2H_5$, $OCH_3$, $OC_2H_5$, Cl substituiert sein kann,

Z = $Z_7$, wobei $Z_7$ = 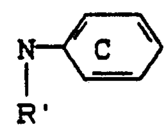 ,

worin der Benzolring C gegebenenfalls durch Cl, $CH_3$, $C_2H_5$, $OCH_3$, $OC_2H_5$, $SO_3H$ oder COOH substituiert sein kann,

R' = gegebenenfalls substituiertes $C_1$-$C_4$-Alkyl, wobei der Rest $Z_7$ vorzugsweise eine $SO_3H$- oder $OSO_3H$-Gruppe enthält,

n = 1,

mit Ausnahme von Farbstoffen mit $T_1 = T_2 = Cl$ und Z = Rest des 3,5-Disulfoanilins, 2,5-Disulfoanilins, 2-Sulfoanilins, 2-Carboxy-4-sulfoanilins oder 2,3-Dicarboxyanilins.

2. Farbstoffe des Anspruchs 1 der Formel

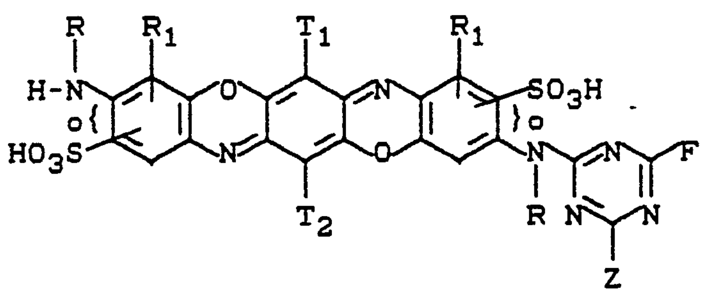

wobei R, $R_1$, $T_1$, $T_2$, Z die in Anspruch 1 angegebene Bedeutung haben.

3. Farbstoffe des Anspruchs 1, dadurch gekennzeichnet, daß Z = $Z_1$ ist und die übrigen Reste die in Anspruch 1 genannte Bedeutung haben.

4. Verwendung der Farbstoffe der Ansprüche 1 - 2 zum Färben und Bedrucken von hydroxyl- und amidgruppenhaltigen Materialien.

5. Mit den Farbstoffen der Ansprüche 1 - 2 gefärbte oder bedruckte hydroxyl- oder amidgruppenhaltige Materialien.

6. Verfahren zur Herstellung der Farbstoffe des Anspruchs 1, dadurch gekennzeichnet, daß man 1 Mol eines Triphendioxazinfarbstoffes der Formel

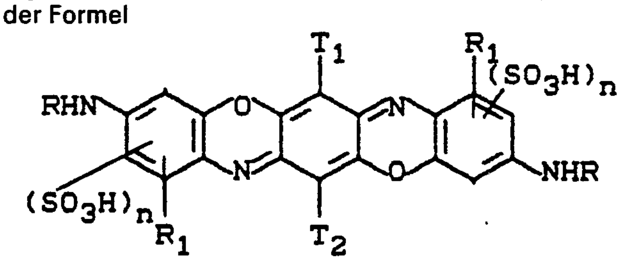

vorzugsweise in Form der entsprechenden Lithiumsalze mit 1 Mol 2,4,6-Trifluortriazin unter Abspaltung von 1 Mol Flußsäure, unter Verwendung von basischen Lithiumverbindungen kondensiert und dann mit 1 Mol eines Amins der Formel

H - Z

umsetzt, vorzugsweise in Gegenwart basischer Lithiumverbindungen, wobei R, $R_1$, $T_1$, $T_2$, n und Z die in Anspruch 1 angegebene Bedeutung haben.

## Claims

1. Reactive dyestuffs of the formula

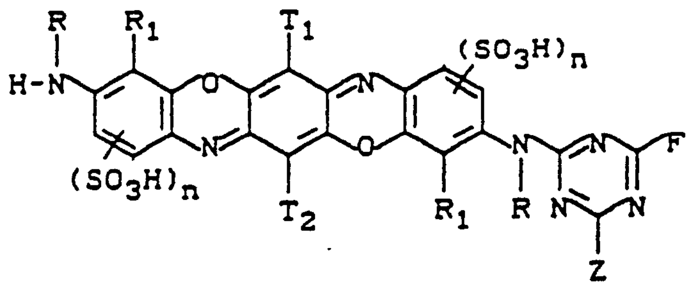

wherein
R = H,
$R_1$ = H,
$T_1$, $T_2$ = H, Cl, Br, optionally substituted $C_1$-$C_4$-alkyl, $C_1$-$C_4$-alkoxy, phenyl or phenoxy,
Z = $Z_1$ where $Z_1$ = a $C_1$-$C_4$-aliphatic amino group substituted by an anionic, water-solubilising group, in particular

group, in particular

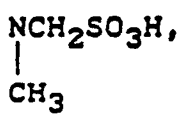, 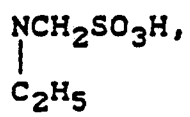, $NHCH_2CH_2SO_3H$, 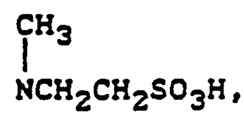,

$NHCH_2CH_2OSO_3H$, 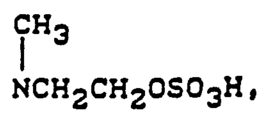, $NHCH_2COOH$,
$NHCH_2CH_2COOH$,

Z = $Z_6$, where $Z_6$ = NH 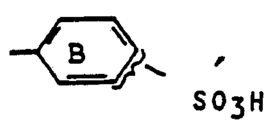 ,

wherein the benzene ring B can be substituted by a $CH_3$, $C_2H_5$, $OCH_3$, $OC_2H_5$ or Cl group,

Z = $Z_7$, where $Z_7$ = 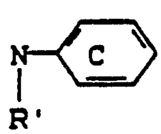 ,

wherein the benzene ring C can be optionally substituted, by Cl, $CH_3$, $C_2H_5$, $OCH_3$, $OC_2H_5$, $SO_3H$ or COOH
R' = optionally substituted $C_1$-$C_4$-alkyl, where the radical $Z_7$ preferably contains an $SO_3H$ or $OSO_3H$ group,
n = 1,

with the exception of dyestuffs where $T_1 = T_2 =$ Cl and Z is a radical of 3,5-disulphaniline, 2,5-disulphaniline, 2-sulphaniline, 2-carboxy-4-sulphaniline or 2,3-dicarboxyaniline.

2. Dyestuffs of Claim 1 of the formula

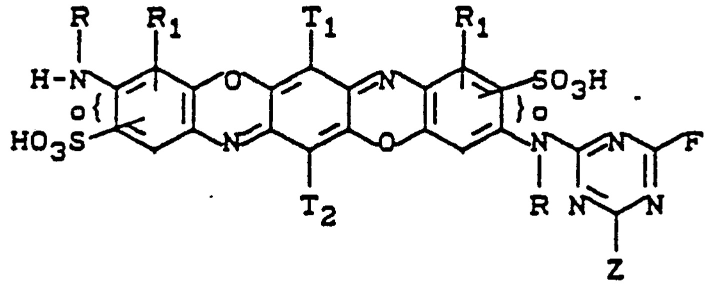

wherein
R, $R_1$, $T_1$, $T_2$ and Z have the meaning indicated in Claim 1.

3. Dyestuffs of Claim 1, characterized in that Z is $Z_1$ and the remaining radicals have the meaning given in Claim 1.

4. Use of the dyestuffs of Claims 1 - 2 for dyeing and printing hydroxyl- and amido-containing materials.

5. Hydroxyl- or amido-containing materials dyed or printed with the dyestuffs of Claims 1 - 2.

6. Process for preparing the dyestuffs of Claim 1, characterized in that 1 mol of a triphendioxazine dyestuff of the formula

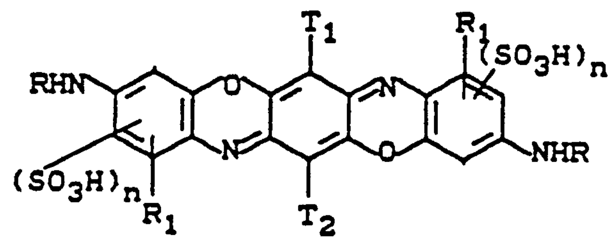

preferably in the form of the corresponding lithium salts, is condensed with 1 mol of 2,4,6-trifluorotriazine with elimination of 1 mol of hydrofluoric acid and using basic lithium compounds, and the condensation product is then reacted with 1 mol of an amine of the formula

H - Z

preferably in the presence of basic lithium compounds, wherein R, $R_1$, $T_1$, $T_2$, n and Z have the meaning as indicated in Claim 1.

## Revendications

1. Colorants réactifs de formule

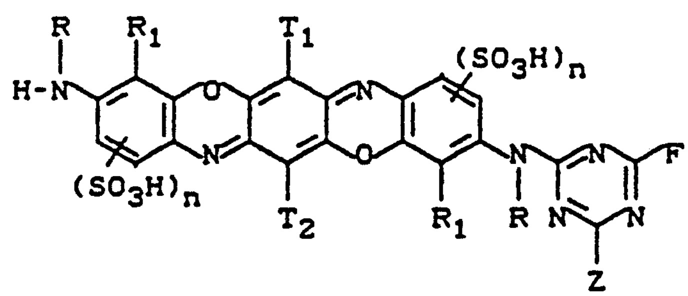

dans laquelle
R représente H,
$R_1$ représente H,
$T_1$, $T_2$ représentent H, Cl, Br, un groupe alkyle en $C_1$ à $C_4$, alkoxy en $C_1$ à $C_4$, phényle ou phénoxy éventuellement substitué,
Z représente $Z_1$, et $Z_1$ est un groupe amino aliphatique en $C_1$ à $C_4$ substitué par un groupe anionique

hydrosolubilisant, notamment

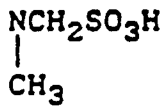, 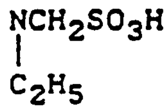, $NHCH_2CH_2SO_3H$, 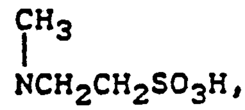,

$NHCH_2CH_2OSO_3H$, 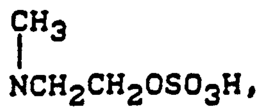, $NHCH_2COOH$, $NHCH_2CH_2COOH$,

Z représente $Z_6$, et $Z_6$ est un groupe

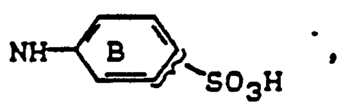

le noyau benzénique B pouvant être substitué par un groupe $CH_3$, $C_2H_5$, $OCH_3$, $OC_2H_5$ ou Cl

Z représente $Z_7$, et $Z_7$ est un groupe

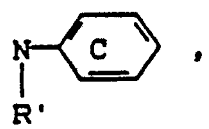

le noyau benzénique C pouvant être substitué, le cas échéant, par Cl, $CH_3$, $C_2H_5$, $OCH_3$, $OC_2H_5$, $SO_3H$ ou COOH,

R' est un groupe alkyle en $C_1$ à $C_4$ éventuellement substitué, le reste $Z_7$ contenant de préférence un groupe $SO_3H$ ou $OSO_3H$,

n est égal à 1,

à l'exception de colorants dans lesquels $T_1$ est identique à $T_2$ et représente le chlore et Z est un reste de la 3,5-disulfo-aniline, de la 2,5-disulfo-aniline, de la 2-sulfo-aniline, de la 2-carboxy-4-sulfo-aniline ou de la 2,3-dicarboxyaniline.

2. Colorants suivant la revendication 1, de formule

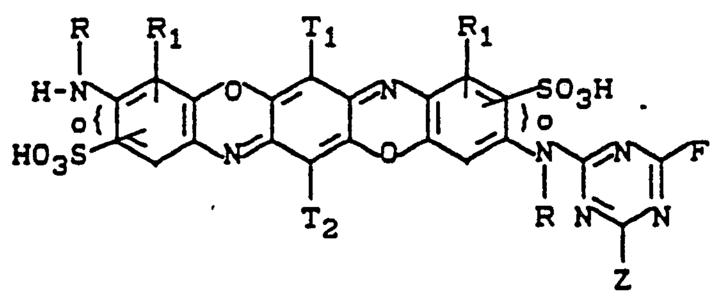

dans laquelle R, $R_1$, $T_1$, $T_2$, Z ont la définition indiquée dans la revendication 1.

3. Colorants suivant la revendication 1, caractérisés en ce que Z représente $Z_1$ et les autres restes ont la définition mentionnée dans la revendication 1.

4. Utilisation des colorants suivant les revendications 1 et 2, pour la teinture et l'impression de matières contenant des groupes hydroxyle et amide.

5. Des matières contenant des groupes hydroxyle ou des groupes amide teintes ou imprimées avec les colorants des revendications 1 et 2.

6. Procédé de production des colorants suivant la revendication 1, caractérisé en ce qu'on condense 1 mole d'un colorant triphénodioxazinique de formule

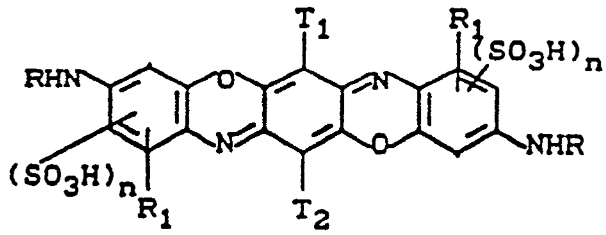

de préference sous la forme des sels de lithium correspondants avec 1 mole de 2,4,6-trifluorotriazine avec élimination de 1 mole d'acide fluorhydrique, en utilisant des composés basiques de lithium, puis on fait réagir le produit avec 1 mole d'une amine de formule

H - Z

de préférence en présence de composés basiques de lithium, les variables R, $R_1$, $T_1$, $T_2$, n et Z ayant la définition indiquée dans la revendication 1.